(19) Europäisches Patentamt
European Patent Office
Office européen des brevets

(11) **EP 1 415 960 B1**

(12) **EUROPEAN PATENT SPECIFICATION**

(45) Date of publication and mention
of the grant of the patent:
**25.07.2012 Bulletin 2012/30**

(51) Int Cl.:
*C04B 35/468* (2006.01)      *C04B 35/634* (2006.01)
*H01G 4/12* (2006.01)      *H01G 4/20* (2006.01)
*C01G 25/00* (2006.01)      *C01G 25/02* (2006.01)
*C01G 23/00* (2006.01)

(21) Application number: **03023951.1**

(22) Date of filing: **22.10.2003**

(54) **Method for making raw dielectric ceramic powder, dielectric ceramic and monolithic ceramic capacitor**

Verfahren zur Herstellung von keramischen dielektrischen Rohstoffen, eine dielektrische Keramik und einen monolithischen dielektrischen Kondensator.

Procédé pour fabrication de matière première céramique diélectrique, une céramique diélectrique et condensateur céramique monolithique

(84) Designated Contracting States:
**AT BE BG CH CY CZ DE DK EE ES FI FR GB GR HU IE IT LI LU MC NL PT RO SE SI SK TR**

(30) Priority: **30.10.2002 JP 2002315492**

(43) Date of publication of application:
**06.05.2004 Bulletin 2004/19**

(73) Proprietor: **MURATA MANUFACTURING CO., LTD. Nagaokakyo-shi, Kyoto 617-8555 (JP)**

(72) Inventors:
  • **Yoshikawa, Yuji,**
   c/o (A170) Intellectual Property Department,
   **Nagaokakyo-shi,**
   **Kyoto-fu 617-8555, (JP)**
  • **Hata, Kotaro,**
   c/o (A170) Intellectual Property Department,
   **Nagaokakyo-shi,**
   **Kyoto-fu 617-8555, (JP)**
  • **Nakamura, Yasunari,**
   c/o (A170) Intellectual Property Department,
   **Nagaokakyo-shi,**
   **Kyoto-fu 617-8555, (JP)**

(74) Representative: **Zinnecker, Armin et al**
**Lorenz Seidler Gossel**
**Rechtsanwälte - Patentanwälte**
**Widenmayerstrasse 23**
**80538 München (DE)**

(56) References cited:
**EP-A- 1 013 608      WO-A-01/10781**
**GB-A- 1 241 974      US-A1- 2002 135 971**

• **PATENT ABSTRACTS OF JAPAN vol. 018, no. 361 (C-1222), 7 July 1994 (1994-07-07) & JP 06 093204 A (NITTETSU MINING CO LTD), 5 April 1994 (1994-04-05)**
• **PATENT ABSTRACTS OF JAPAN vol. 1995, no. 08, 29 September 1995 (1995-09-29) & JP 07 118062 A (SEKISUI PLASTICS CO LTD), 9 May 1995 (1995-05-09)**

**Description**

BACKGROUND OF THE INVENTION

1. Field of the Invention

The present invention relates to methods for making raw dielectric ceramic powders, dielectric ceramics produced by molding and firing the raw dielectric ceramic powders produced by the methods, and monolithic ceramic capacitors fabricated using the dielectric ceramics. More particularly, the invention relates to a method for making a raw dielectric ceramic powder which has a fine grain size and which is excellent in composition homogeneity, and thereby the thickness of dielectric ceramic layers can be decreased in a monolithic ceramic capacitor.

2. Description of the Related Art

A monolithic ceramic capacitor is usually fabricated by the following method.

First, ceramic green sheets containing a raw dielectric ceramic powder are prepared, in which the surface of each sheet is provided with a conductive material for forming an internal electrode with a predetermined pattern. As the raw dielectric ceramic powder, for example, a powder with a composition of $BaTiO_3$ can be used.

Next, a plurality of ceramic green sheets including the ceramic green sheets provided with the conductive material are stacked and thermocompression-bonded to each other, and an integrated green laminate is thereby produced.

The green laminate is then fired, and a sintered laminate is thereby produced. Internal electrodes composed of the conductive material are present in the resultant laminate.

External electrodes are then formed on the exterior surface of the laminate so as to be electrically connected to the predetermined internal electrodes. The external electrodes are formed, for example, by applying a conductive paste containing a conductive metal powder and a glass frit on the exterior surface of the laminate, followed by baking.

A monolithic capacitor is thereby completed.

As a part of recent developments in electronics technology, electronic components are rapidly miniaturized. Accordingly, monolithic ceramic capacitors are also miniaturized and the capacitance thereof is increasing. In order to miniaturize monolithic ceramic capacitors and to increase the capacitance thereof, it is effective to decrease the thicknesses of the dielectric ceramic layers.

In order to decrease the thicknesses of the dielectric ceramic layers, it is important that the raw dielectric ceramic powder is homogeneous. For example, in order to obtain a $BaTiO_3$-based raw dielectric ceramic powder, in a conventional method, a $BaCO_3$ powder and a $TiO_2$ powder are mixed and calcined to cause a solid phase reaction, and thereby $BaTiO_3$ is synthesized. It is most important to disperse the $BaCO_3$ powder and the $TiO_2$ powder as homogeneously as possible in order to prepare a homogeneous $BaTiO_3$-based raw dielectric ceramic powder by such a solid phase reaction. In order to homogeneously disperse the $BaCO_3$ powder and the $TiO_2$ powder, the specific surface areas of these powders are often increased, or a processing including mechanical pulverization, such as a dispersion method using media, is often performed.

Japanese Unexamined Patent Application Publication No. 7-118062 also discloses a method for producing a $BaTiO_3$-based semiconductor ceramic composition in which a $BaCO_3$ powder with an average grain size of 0.5 to 1.4 $\mu$m and a $TiO_2$ powder with an average grain size of 0.5 to 1.1 $\mu$m together with an anionic organic dispersant are mixed. According to this document, the advantage is in that, the $BaCO_3$ powder and the $TiO_2$ powder, each having a fine grain size, can be mixed homogeneously while avoiding agglomeration thereof by adding the anionic organic dispersant during mixing of the two powders.

However, even if the refined $BaCO_3$ powder and $TiO_2$ powder are homogeneously dispersed as described above, the $BaCO_3$ grains easily grow in the calcination step for synthesizing the $BaTiO_3$ from $BaCO_3$ and $TiO_2$. Therefore, there may be a case in which the $BaCO_3$ grains grow before reaction with $TiO_2$, and a homogeneous reaction with $TiO_2$ does not easily proceed.

Although the case in which the $BaTiO_3$-based raw powder is used as the raw dielectric ceramic powder has been described above, similar problems may be encountered with respect to a method for producing a raw dielectric ceramic powder in general, such as a method for producing a raw dielectric ceramic powder having a composition represented by the general formula $ABO_3$, wherein A is at least one of Ba, Ca, Sr and Mg, and B is at least one of Ti and Zr, in which a carbonate powder of A and an oxide powder of B are mixed and calcined to synthesize $ABO_3$.

WO-A-0 110 781 discloses a method for manufacturing a $BaTiO_3$ group powder having a high density and a controlled stoichiometry.

US-A-2002135971 discloses a titanium oxide powder comprising titanium oxide particles having a barium compound on the surfaces of the particles.

GB-A-1241974 discloses a calcined powder comprising barium titanate.

EP-A-1 013 608 discloses a barium titanate powder comprising an average particle size ranging from 0.1 to 1.0 $\mu$m.

JP-A-6093204 discloses a pigment obtained by carrying out the spraying and adding treatment of preferably 1 - 5 pts.wt. alkali metallic salt of polyacrylic acid.

SUMMARY OF THE INVENTION

It is an object of the present invention to provide a method for making a raw dielectric ceramic powder, a dielectric ceramic produced by molding and firing the raw dielectric ceramic powder produced by the method, and a monolithic ceramic capacitor fabricated by using the dielectric ceramic, which can overcome the problems described above.

In one aspect, the present invention is directed to a method for making a raw dielectric ceramic powder having a composition represented by the general formula $ABO_3$, wherein A is at least one element selected from the group consisting of Ba, Ca, Sr and Mg, and B is at least one element selected from the group consisting of Ti and Zr. In order to overcome the technical problems described above, the method of the present invention is characterized by the features of claim 1.

Preferably, the method for making the raw dielectric ceramic powder of the present invention includes the steps of allowing a carbonate powder of A to adsorb an organic polymer compound to produce an organic carbonate powder containing the adsorbed organic polymer compound, mixing the organic carbonate powder with an oxide powder of B to prepare a mixed powder, and then calcining the mixed powder. The raw dielectric ceramic powder is thereby produced.

Allowing the carbonate powder of A to adsorb the organic polymer compound is preferably carried out by the step of preparing a slurry of the carbonate powder of A dispersed in a solution containing the organic polymer compound and thereafter removing a solvent contained in the slurry to produce the organic carbonate powder containing the adsorbed organic polymer compound.

In the method for making the raw dielectric ceramic powder of the present invention, the organic polymer compound has a weight average molecular weight in the range of about 1,000 to 100,000.

Preferably, the carbonate powder is a $BaCO_3$ powder with a specific surface area of about 10 m$^2$/g or more. The amount of the organic polymer compound adsorbed is preferably in the range of about 0.1% to 5.0% by weight of the amount of the carbonate powder.

A dielectric ceramic can be produced by molding and firing the raw dielectric ceramic powder obtained by the method described above.

A monolithic ceramic capacitor can be fabricated by using the dielectric ceramic described above.

The monolithic ceramic capacitor includes a laminate including a plurality of dielectric ceramic layers and internal electrodes extending along the predetermined interfaces between the dielectric ceramic layers, and external electrodes disposed on the exterior surface of the laminate so as to be electrically connected to the predetermined internal electrodes. The monolithic ceramic capacitor is characterized in that the dielectric ceramic layers are composed of the dielectric ceramic described above.

In another aspect, the present invention is directed to a method for making a dielectric ceramic. The method preferably includes the steps of allowing a carbonate powder of A to adsorb an organic polymer compound to produce an organic carbonate powder containing the adsorbed organic polymer compound, wherein A is at least one element selected from the group consisting of Ba, Ca, Sr and Mg; mixing the organic carbonate powder and an oxide powder of B to prepare a mixed powder, wherein B is at least one element selected from the group consisting of Ti and Zr; calcining the mixed powder to produce a raw dielectric ceramic powder having a composition represented by the general formula $ABO_3$; adding a binder and a solvent to the raw dielectric ceramic powder to prepare a ceramic slurry; molding the ceramic slurry to form a green dielectric ceramic compact; and firing the green dielectric ceramic compact.

In another aspect, the present invention is directed to a method for fabricating a monolithic ceramic capacitor. The method preferably includes the steps of allowing a carbonate powder of A to adsorb an organic polymer compound to produce an organic carbonate powder containing the adsorbed organic polymer compound, wherein A is at least one element selected from the group consisting of Ba, Ca, Sr and Mg; mixing the organic carbonate powder and an oxide powder of B to prepare a mixed powder, wherein B is at least one element selected from the group consisting of Ti and Zr; calcining the mixed powder to produce a raw dielectric ceramic powder having a composition represented by the general formula $ABO_3$; adding a binder and a solvent to the raw dielectric ceramic powder to prepare a ceramic slurry; forming a green ceramic laminate including a plurality of green ceramic layers formed by molding the ceramic slurry and internal electrodes extending along the predetermined interfaces of the ceramic layers; and firing the green ceramic laminate.

BRIEF DESCRIPTION OF THE DRAWING

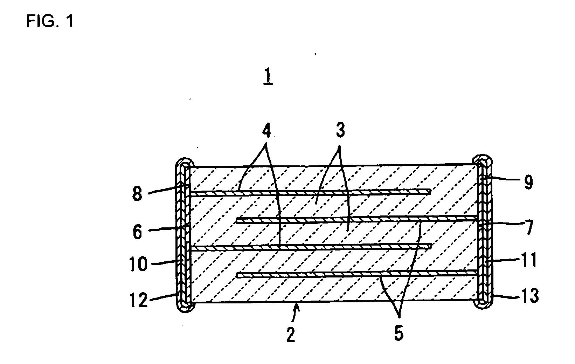

FIG. 1 is a cross-sectional view which schematically shows a monolithic ceramic capacitor in an embodiment of the present invention.

DESCRIPTION OF THE PREFERRED EMBODIMENTS

As shown in FIG. 1, a monolithic ceramic capacitor 1 includes a laminate 2. The laminate 2 includes a plurality of dielectric ceramic layers 3 and a plurality of internal electrodes 4 and 5 extending along the predetermined interfaces between the plurality of dielectric ceramic layers 3. The internal electrodes 4 and 5 are disposed so as to extend to the exterior surface of the laminate 2. The internal electrodes 4 which extend to one end face 6 and the internal electrodes 5 which extend to the other end face 7 are alternately arranged in the laminate 2.

External electrodes 8 and 9 are disposed on the end faces 6 and 7 of the exterior surface of the laminate 2, respectively. First plating layers 10 and 11 composed of nickel, copper or the like, are disposed on the external electrodes 8 and 9, respectively, and second plating layers 12 and 13 composed of solder, tin or the like, are disposed further thereon, respectively.

In such a monolithic ceramic capacitor 1, the dielectric ceramic layer 3 is formed by firing a ceramic green sheet which is prepared by molding a ceramic slurry containing a raw dielectric ceramic powder having a composition represented by the general formula $ABO_3$, wherein A is at least one element selected from the group consisting of Ba, Ca, Sr and Mg, and B is at least one element selected from the group consisting of Ti and Zr, such as $BaTiO_3$. The raw dielectric ceramic powder is produced by the following method.

First, the step of allowing a carbonate powder of A to adsorb an organic polymer compound to produce an organic carbonate powder containing the adsorbed organic polymer compound is carried out. In order to carry out this step, preferably, for example, a slurry in which the carbonate powder of A is dispersed in a solution containing the organic polymer compound is prepared, and then a solvent contained in the slurry is removed by drying or the like. Any convenient solvent(s) which dissolve the polymer but do not substantially dissolve the carbonate can be used, in which a water, an organic solvent such as ethanol, isopropanol, toluene, xylene and acetone, or the mixture thereof can be used as the suitable solvent. Thereby, the organic carbonate powder containing the organic polymer compound adsorbed onto the surface of the carbonate powder is produced. As necessary, the organic carbonate powder containing the adsorbed organic polymer compound is subjected to a heat treatment to firmly fix the polymer on the surface of the carbonate powder. In this case, the heat treatment can be completed under a temperature in which the absorbed polymer on the surface of the carbonate powder could not burn out, and the time for heat treatment can be selected from about 0.5 to about 3 hours, particularly 2 hours.

Next, the step of mixing the organic carbonate powder containing the adsorbed organic polymer compound and an oxide powder of B to prepare a mixed powder is carried out. The step of calcining the mixed powder is then carried out, and a raw dielectric ceramic powder is thereby produced.

In such a production method, sintering and grain growth of the carbonate powder of A are inhibited in the calcination step since the organic carbonate powder containing the adsorbed organic polymer compound is used as the carbonate powder of A. Consequently, calcination can be performed in a state in which the carbonate of A and the oxide of B are homogeneously dispersed while maintaining the fine grain size of the carbonate powder of A. As a result, it is possible to produce an $ABO_3$-based raw dielectric ceramic powder which has a fine grain size and which is excellent in composition homogeneity.

The amount of the organic polymer compound adsorbed is not particularly limited. If the amount of adsorption is too small, a desired effect is not obtained. If the amount of adsorption is too large, there is a possibility of an increase in production cost because the heat treatment profile must be precisely controlled in order to pyrolyze the organic substances sufficiently, etc. In consideration of these factors, the amount of adsorption of the organic polymer compound is preferably in the range of 0.1% to 5.0% by weight, and more preferably in the range of about 0.3% to 2.0% by weight.

The molecular weight (equal to the weight average molecular weight in the present application) of the organic polymer compound used is in the range of about 1,000 to 100,000. If the molecular weight is less than about 1,000, the organic polymer compound is decomposed before the effect of the organic polymer compound is displayed in the synthesis of $ABO_3$. On the other hand, if the molecular weight exceeds about 100,000, pyrolysis does not easily occur, and the amount of residual carbon increases in the dielectric ceramic after firing, which may adversely affect the characteristics of the monolithic ceramic capacitor 1. Preferably, the organic polymer compound contains at least one functional group selected from the group consisting of a carboxyl group, a vinyl group an acrylic group, and an epoxy group. As the molecular weight of the organic polymer compound is in the range described above and the organic polymer compound contains the functional group described above, the organic polymer compound is efficiently adsorbed onto the carbonate powder, and sintering and grain growth of the carbonate powder of A are inhibited more effectively in the calcination step.

In order to produce a $BaTiO_3$-based raw dielectric ceramic powder, usually, a $BaCO_3$ powder is used as the carbonate powder of A and a $TiO_2$ powder is used as the oxide powder of B. Preferably, the $BaCO_3$ powder has a specific surface area of about 10 $m^2$/g or more. By setting the specific surface area at about 10 $m^2$/g or more, the effects brought about by the organic polymer compound are more remarkably displayed. The specific surface area of the $BaCO_3$ powder is preferably about 10 to 80 $m^2$/g, and more preferably about 10 to 40 $m^2$/g.

The carbonate powder, which is a carbonate powder of at least one of Ba, Ca, Sr and Mg, and which contains an organic polymer compound with a molecular weight of about 1,000 to 100,000 adsorbed onto the surface, the amount of the organic polymer compound adsorbed being about 0.1% to 5.0% of the amount of the carbonate powder, is particularly favorably used in the production of the raw dielectric ceramic powder.

A method for fabricating the monolithic ceramic capacitor 1 shown in FIG. 1 using the raw dielectric ceramic powder produced as described above will now be described.

First, an organic binder and a solvent are added to the raw dielectric ceramic powder produced as described above, and mixing is performed to prepare a ceramic slurry. By forming the ceramic slurry into sheets, ceramic green sheets for the dielectric ceramic layers 3, i.e., green dielectric ceramic compacts, are prepared. Additionally, as necessary, a rare-earth element, Mn, a sintering aid, etc., may be added to the ceramic slurry.

Next, conductive paste films for the internal electrodes 4 or 5 are formed on the predetermined ceramic green sheets, for example, by screen-printing.

Next, a plurality of ceramic green sheets including the ceramic green sheets provided with the conductive paste films are stacked and thermocompression-bonded to each other, and as necessary, cutting is performed. A green ceramic laminate is thereby obtained, which includes the plurality of ceramic green sheets and the conductive paste films for the internal electrodes 4 and 5 extending along the predetermined interfaces between the ceramic green sheets. In the green ceramic laminate, the edges of the conductive paste films are exposed to either one of the end faces of the green ceramic laminate.

The green ceramic laminate is then fired. Thereby, the sintered laminate 2 shown in FIG. 1 is obtained. In the laminate 2, the ceramic green sheets constitute the dielectric ceramic layers 3, and the conductive paste films constitute the internal electrodes 4 and 5.

Next, a conductive paste is applied to the end faces 6 and 7 of the laminate 2 so as to be electrically connected to the exposed edges of the internal electrodes 4 and 5, respectively, followed by baking. The external electrodes 8 and 9 are thereby formed.

Next, as necessary, by plating the external electrodes 8 and 9 with nickel, copper or the like, the first plating layers 10 and 11 are formed. By plating the first plating layers 10 and 11 with solder, tin or the like, the second plating layers 12 and 13 are formed.

Thereby, the monolithic ceramic capacitor 1 is completed.

With respect to the monolithic ceramic capacitor 1 thus obtained, since the fine grain size and composition homogeneity in the raw powder are maintained in the dielectric ceramic constituting the dielectric ceramic layers 3, the crystal grain size is small and the grain size distribution is sharp. Consequently, it is possible to minimize the variation in the electric characteristics of the monolithic ceramic capacitor 1 due to the variation in the crystal grain size. This effect is more remarkably displayed as the thicknesses of the dielectric ceramic layers 3 are decreased and the number of dielectric ceramic layers 3 laminated is increased. Therefore, the reduction in size and the increase in the capacitance of the monolithic ceramic capacitor 1 can be achieved advantageously.

Next, the examples of experiments performed in order to confirm the effects of the present invention will be described below.

EXAMPLES

1. Experiment for production of raw dielectric ceramic powder

Example 1

As starting materials, a $BaCO_3$ powder with a specific surface area of 18 $m^2$/g which contained 0.8% by weight of a poly(vinyl butyral)-based organic polymer compound having a molecular weight of approximately 21,000 adsorbed, and a $TiO_2$ powder with a specific surface area of 20 $m^2$/g were each weighed so that the molar ratio Ba/Ti was 1.000, and these powders were wet-mixed. The resultant mixed powder was dried, and then calcined at 1,100°C for 2 hours in a batch-type furnace. Next, by pulverizing the resultant calcine with a dry pulverizer, a barium titanate-based raw dielectric ceramic powder was produced.

Comparative Example 1

A barium titanate-based raw dielectric ceramic powder was produced under the same conditions as those in Example 1 except that a $BaCO_3$ powder which did not contain the adsorbed poly(vinyl butyral)-based organic polymer compound was used as a starting material.

Example 2

As starting materials, a $BaCO_3$ powder with a specific surface area of 12 $m^2/g$ which contained 1.3% by weight of a polycarboxylic acid ammonium salt-based organic polymer compound having a molecular weight of approximately 10,000 adsorbed, and a $TiO_2$ powder with a specific surface area of 10 $m^2/g$ were each weighed so that the molar ratio Ba/Ti was 1.000, and these powders were wet-mixed. The resultant mixed powder was dried, and then calcined at 1,100°C for 2 hours in a batch-type furnace. Next, by pulverizing the resultant calcine with a dry pulverizer, a barium titanate-based raw dielectric ceramic powder was produced.

Comparative Example 2

A barium titanate-based raw dielectric ceramic powder was produced under the same conditions as those in Example 2 except that a $BaCO_3$ powder which did not contain the adsorbed polycarboxylic acid ammonium salt-based organic polymer compound was used as a starting material.

Example 3

As starting materials, a $BaCO_3$ powder with a specific surface area of 25 $m^2/g$ which contained 1% by weight of a styrene-maleic anhydride copolymer-type polymeric surfactant having a molecular weight of approximately 15,000 adsorbed, a $CaCO_3$ powder having a specific surface area of 30 $m^2/g$ which contained 1% by weight of styrene-maleic anhydride copolymer-type polymeric surfactant similarly adsorbed, and a $TiO_2$ powder with a specific surface area of 15 $m^2/g$ were each weighed so as to satisfy the molar ratio of $(Ba_{0.95}Ca_{0.05})_{1.000}TiO_3$, and these powders were wet-mixed. The resultant mixed powder was dried, and then calcined at 1,100°C for 2 hours in a batch-type furnace. Next, by pulverizing the resultant calcine with a dry pulverizer, a Ca-modified barium titanate-based raw dielectric ceramic powder was produced.

Comparative Example 3

A Ca-modified barium titanate-based raw dielectric ceramic powder was produced under the same conditions as those in Example 3 except that a $BaCO_3$ powder and a $CaCO_3$ powder which did not contain the adsorbed polymeric surfactant were used as starting materials.

Example 4

As starting materials, a $CaCO_3$ powder with a specific surface area of 5 $m^2/g$ which contained 0.9% by weight of an epoxy resin having a molecular weight of approximately 7,000 adsorbed, and a $ZrO_2$ powder with a specific surface area of 31 $m^2/g$ were each weighed so that the molar ratio Ca/Zr was 0.999, and these powders were wet-mixed. The resultant mixed powder was dried, and then calcined at 1,200°C for 2 hours in a batch-type furnace. Next, by pulverizing the resultant calcine with a dry pulverizer, a calcium zirconate-based raw dielectric ceramic powder was produced.

Comparative Example 4

A calcium zirconate-based raw dielectric ceramic powder was produced under the same conditions as those in Example 4 except that a $CaCO_3$ powder which did not contain the adsorbed epoxy resin was used as a starting material.

Example 5

As starting materials, a $BaCO_3$ powder with a specific surface area of 19 $m^2/g$ which contained 1.1% by weight of poly(methyl methacrylate) having a molecular weight of approximately 9,000 adsorbed, a $CaCO_3$ powder having a specific surface area of 30 $m^2/g$ which contained 1.1% by weight of poly(methyl methacrylate) similarly adsorbed, and a $TiO_2$ powder with a specific surface area of 20 $m^2/g$ were each weighed so as to satisfy the molar ratio of $(Ba_{0.92}Ca_{0.08})_{1.001}(Zr_{0.2}Ti_{0.8})O_3$, and these powders were wet-mixed. The resultant mixed powder was dried, and then calcined at 1,150°C for 2 hours in a batch-type furnace. Next, by pulverizing the resultant calcine with a dry pulverizer, a Ca-modified barium zirconate titanate-based raw dielectric ceramic powder was produced.

Comparative Example 5

A Ca-modified barium zirconate titanate-based raw dielectric ceramic powder was produced under the same conditions as those in Example 5 except that a $BaCO_3$ powder and a $CaCO_3$ powder which did not contain the adsorbed poly(methyl methacrylate) were used as starting materials.

Example 6

A barium titanate-based raw dielectric ceramic powder was produced under the same conditions as those in Example 2 except that a $BaCO_3$ powder with a specific surface area of 6 $m^2/g$ which contained 1.3% by weight of a polycarboxylic acid ammonium salt-based organic polymer compound with a molecular weight of approximately 10,000 adsorbed was used as a starting material.

Evaluation

With respect to the raw dielectric ceramic powders produced in Examples 1 to 6 and Comparative Examples 1 to 5, the specific surface area (SS), the grain size distribution ($D_{90}$), and the molar ratio variation were measured as shown in Table 1.

The specific surface area (SS) was measured by the BET process. The grain size distribution ($D_{90}$) was measured using a laser-diffraction grain size distribution analyzer. With respect to the molar ratio variation, the molar ratios of ten primary particles were measured by a TEM, and the difference between the maximum value and the minimum value was defined as the variation.

Table 1

|  | SS ($m^2/g$) | $D_{90}$ ($\mu$m) | Molar ratio variation |
|---|---|---|---|
| Example 1 | 5.80 | 0.78 | 0.007 |
| Comparative Example 1 | 4.51 | 1.02 | 0.015 |
| Example 2 | 5.13 | 0.82 | 0.005 |
| Comparative Example 2 | 4.03 | 1.13 | 0.011 |
| Example 3 | 4.88 | 0.85 | 0.005 |
| Comparative Example 3 | 3.54 | 2.07 | 0.015 |
| Example 4 | 6.82 | 0.96 | 0.008 |
| Comparative Example 4 | 5.77 | 1.35 | 0.020 |
| Example 5 | 6.13 | 0.88 | 0.007 |
| Comparative Example 5 | 5.33 | 1.21 | 0.025 |
| Example 6 | 4.91 | 0.95 | 0.009 |

As is evident from Table 1, the grain size distributions ($D_{90}$) and molar ratio distributions of the resultant raw dielectric ceramic powders are improved and the resultant raw dielectric ceramic powders are homogeneous with fine grain sizes in Examples 1 to 6 in which the carbonate powders containing the adsorbed organic polymer compounds are used as starting materials, compared to Comparative Examples 1 to 5 in which the carbonate powders not containing the adsorbed organic polymer compounds are used.

As is also evident from Table 1, Example 2 and Example 6 differ only in the specific surface area of the $BaCO_3$ powder employed the starting material. In Example 2 with a specific surface area of 10 $m^2/g$ or more, the effects described above are more remarkably displayed compared to Example 6 with a specific surface area of less than 10 $m^2/g$.

2. Experiment for fabrication of monolithic ceramic capacitor

Example

A rare-earth element, Mn, and a sintering aid were added to the barium titanate-based raw dielectric ceramic powder produced in Example 1 so that the capacitance temperature characteristics of the composition satisfied the X7R characteristics stipulated in the EIA standard. A poly(vinyl butyral)-based binder and an organic solvent, such as ethanol, were added thereto, and wet-mixing was performed using a ball mill. A ceramic slurry was thereby prepared.

Next, the ceramic slurry was formed into sheets by a gravure coating method so that the sintered dielectric ceramic layers had a thickness of 2.5 $\mu$m. Ceramic green sheets were thereby produced.

A conductive paste containing nickel as a conductive component was screenprinted onto the ceramic green sheets to form conductive paste films for internal electrodes.

Next, a plurality of ceramic green sheets including the ceramic green sheets provided with the conductive paste films were laminated so that the conductive paste films were exposed to the alternate end faces. A green laminate was thereby produced.

Next, the green laminate was heated to 280°C to bum out the binder, and was fired at 1,200°C for 2 hours in a reducing atmosphere comprising gases of $H_2$, $N_2$ and $H_2O$. A sintered laminate was thereby produced.

A conductive paste containing a $B_2O_3$-$Li_2O$-$SiO_2$-BaO-based glass frit and containing silver as a conductive component was applied to both end faces of the laminate, and baking was performed at 800°C in a nitrogen atmosphere. External electrodes which were electrically connected to the internal electrodes were thereby formed.

A monolithic ceramic capacitor was fabricated as described above, in which five dielectric ceramic layers were interposed between the internal electrodes, each dielectric ceramic layer having a thickness of 2.5 $\mu$m, and the area of the counter electrode per layer was 2.85 mm$^2$.

Comparative Example

A monolithic ceramic capacitor in Comparative Example was fabricated under the same conditions as those in Example except that a barium titanate-based raw dielectric ceramic powder produced in Comparative Example 1 was used.

Evaluation

With respect to the monolithic ceramic capacitors produced in Example and Comparative Example, the relative dielectric constant ($\varepsilon$) and the insulation resistance (log IR) at room temperature were measured and the results are shown in Table 2.

The relative dielectric constant ($\varepsilon$) was calculated based on the capacitance measured by an LCR meter at 1 kHz and 0.5 V$_{rmz}$. The insulation resistance (log IR) was calculated based on the resistance ($\Omega$) measured after application of a voltage of 6.3 V for 120 seconds. Measurement was carried out for 40 samples each, and the mean value and the variation (3CV) were calculated. The variation (3CV) was calculated according the following equation.

$$3CV = 3 \times (\sigma/\text{mean value}) \times 100$$

Table 2

|  | $\varepsilon$ | | log IR | |
| --- | --- | --- | --- | --- |
|  | Mean value | 3CV (%) | Mean value | 3CV (%) |
| Example | 2,030 | 2.0 | 11.3 | 0.5 |
| Comparative Example | 2,010 | 5.4 | 10.7 | 10.2 |

As is evident from Table 2, the variations in electrical characteristics of the monolithic ceramic capacitor are smaller in the Example than those in Comparative Example. Consequently, it is obvious that the raw dielectric ceramic powder according to Example 1 used for fabricating the monolithic ceramic capacitor in the Example maintains the fine crystal grain size and the sharp grain size distribution even after firing.

In accordance with the method for making the raw dielectric ceramic powder of the present invention, since the carbonate powder containing the adsorbed organic polymer compound is used as the carbonate powder of A, sintering and grain growth of the carbonate powder of A are inhibited in the calcination step for synthesis of $ABO_3$. Consequently, calcination can be performed in a state in which the carbonate of A and the oxide of B are homogeneously dispersed while maintaining the fine grain size of the carbonate powder of A. As a result, it is possible to produce an $ABO_3$-based raw dielectric ceramic powder which has a fine grain size and which is excellent in composition homogeneity.

When the carbonate powder of A is allowed to adsorb the organic polymer compound by preparing a slurry in which the carbonate powder of A is dispersed in a solution containing the organic polymer compound and by removing a solvent contained in the slurry, it is possible to efficiently produce the organic carbonate powder containing the organic polymer compound adsorbed onto the surface of the carbonate powder.

As the molecular weight of the organic polymer compound used in the method for making the raw dielectric ceramic powder of the present invention is in the range of about 1,000 to 100,000, it is possible to reliably prevent the phenomenon in that the organic polymer compound is decomposed before the effect of the organic polymer compound is displayed in the synthesis of $ABO_3$, or in that the organic polymer compound is not easily pyrolyzed, and the amount of residual carbon increases in the dielectric ceramic after firing, which may adversely affect the characteristics of the resultant monolithic ceramic capacitor.

In the method for making the raw dielectric ceramic powder of the present invention, if a $BaCO_3$ powder with a specific surface area of about 10 $m^2/g$ or more is used as the carbonate powder of A, the effects brought about by the organic polymer compound are more remarkably displayed.

In accordance with the dielectric ceramic made by the method of the present invention, the fine grain size and composition homogeneity of the raw powder are maintained since the dielectric ceramic is obtained by molding and firing the raw dielectric ceramic powder produced by the method described above,. Therefore, the crystal grain size is small and the grain size distribution is sharp.

Consequently, it is possible to minimize the variation in the electric characteristics due to the variation in the crystal grain size by fabricating a monolithic ceramic capacitor using the dielectric ceramic described above. This effect is more remarkable displayed as the thicknesses of the dielectric ceramic layers are decreased and the number of dielectric ceramic layers is increased. Therefore, the reduction in size and the increase in the capacitance of the monolithic ceramic capacitor can be achieved advantageously.

**Claims**

1. A method for making a raw dielectric ceramic powder having a composition represented by the general formula $ABO_3$, wherein A is at least one element selected from the group consisting of Ba, Ca, Sr and Mg, and B is at least one element selected from the group consisting of Ti and Zr,
   the method comprising providing a mixture of a carbonate powder of A and an oxide powder of B, and calcining the mixture,
   the method being **characterized in that**
   said carbonate powder A has an organic polymer adsorbed thereon, wherein the organic polymer compound has a molecular weight in the range of about 1,000 to 100,000.

2. A method for making a raw dielectric ceramic powder according to Claim 1, further comprising mixing the carbonate powder and the oxide powder of B.

3. A method for making a raw dielectric ceramic powder according to Claim 2, further comprising allowing a carbonate powder of A to adsorb an organic polymer compound to produce the organic carbonate powder containing the adsorbed organic polymer compound.

4. A method for making a raw dielectric ceramic powder according to Claim 3, wherein the procedure for allowing the carbonate powder of A to adsorb the organic polymer compound comprises:

   preparing a slurry of the carbonate powder of A dispersed in a solution containing the organic polymer compound; and
   removing a solvent contained in the slurry to produce the organic carbonate powder containing the organic polymer compound adsorbed onto the surface of the carbonate powder.

5. A method for making a raw dielectric ceramic powder according to any one of Claims 1 to 4, wherein the carbonate powder is a $BaCO_3$ powder with a specific surface area of about 10 $m^2/g$ or more.

**6.** A method for making a raw dielectric ceramic powder according to any one of Claims 1 to 5, wherein the amount of the organic polymer compound adsorbed is in the range of about 0.1 % to 5% by weight of the amount of the carbonate powder.

**7.** A method for making a raw dielectric ceramic powder according to Claim 6, wherein the amount of the organic polymer compound adsorbed is in the range of about 0.3% to 2% by weight of the amount of the carbonate powder.

**8.** A method for making a raw dielectric ceramic powder according to any one of Claims 1 to 7, wherein the carbonate powder is a $BaCO_3$ powder with a specific surface area of about 10 $m^2/g$ or more.

**9.** A method for making a dielectric ceramic comprising:

effecting the method of any one of Claims 1 to 8;
adding binder and solvent to the raw dielectric ceramic powder to prepare a ceramic slurry;
molding the ceramic slurry to form a green dielectric ceramic compact; and
firing the green dielectric ceramic compact.

**10.** A method for fabricating a monolithic ceramic capacitor comprising :

effecting the method of any one of Claims 1 to 8;
adding binder and solvent to the raw dielectric ceramic powder to prepare a ceramic slurry;
forming a green ceramic laminate comprising a plurality of green ceramic layers comprising the ceramic slurry and internal electrodes extending along the predetermined interfaces of the ceramic layers; and
firing the green ceramic laminate.

**Patentansprüche**

**1.** Verfahren zum Herstellen eines dielektrischen Keramikrohpulvers mit einer durch die allgemeine Formel $ABO_3$ dargestellten Zusammensetzung, wobei A mindestens ein Element gewählt aus der Gruppe bestehend aus Ba, Ca, Sr und Mg ist und B mindestens ein Element gewählt aus der Gruppe bestehend aus Ti und Zr ist,
wobei das Verfahren das Vorsehen einer Mischung aus einem Carbonatpulver von A und einem Oxidpulver von B und das Kalzinieren der Mischung umfasst,
wobei das Verfahren **dadurch gekennzeichnet ist, dass**
das Carbonatpulver A ein daran adsorbiertes organisches Polymer aufweist, wobei die organische Polymerverbindung eine relative Molekülmasse in dem Bereich von etwa 1.000 bis 100.000 aufweist.

**2.** Verfahren zum Herstellen eines dielektrischen Keramikrohpulvers nach Anspruch 1, welches weiterhin das Mischen des Carbonatpulvers und des Oxidpulvers von B umfasst.

**3.** Verfahren zum Herstellen eines dielektrischen Keramikrohpulvers nach Anspruch 2, welches weiterhin das Adsorbierenlassen einer organischen Polymerverbindung an einem Carbonatpulver von A umfasst, um das organische Carbonatpulver zu erzeugen, das die adsorbierte organische Polymerverbindung enthält.

**4.** Verfahren zum Herstellen eines dielektrischen Keramikrohpulvers nach Anspruch 3, wobei das Vorgehen zum Adsorbierenlassen der organischen Polymerverbindung an dem Carbonatpulver von A umfasst:

Erzeugen eines Schlickers des in einer die organische Polymerverbindung enthaltenden Lösung dispergierten Carbonatpulvers von A; und
Entfernen eines in dem Schlicker enthaltenen Lösungsmittels, um das organische Carbonatpulver zu erzeugen, das die an der Oberfläche des Carbonatpulvers adsorbierte organische Polymerverbindung enthält.

**5.** Verfahren zum Herstellen eines dielektrischen Keramikrohpulvers nach einem der Ansprüche 1 bis 4, wobei das Carbonatpulver ein $BaCO_3$-Pulver mit einer spezifischen Oberfläche von etwa 10 $m^2/g$ oder mehr ist.

**6.** Verfahren zum Herstellen eines dielektrischen Keramikrohpulvers nach einem der Ansprüche 1 bis 5, wobei die Menge der adsorbierten organischen Polymerverbindung in dem Bereich von etwa 0,1 bis 5 Gewichtsprozent der Menge des Carbonatpulvers liegt.

7. Verfahren zum Herstellen eines dielektrischen Keramikrohpulvers nach Anspruch 6, wobei die Menge der adsorbierten organischen -Polymerverbindung in dem Bereich von etwa 0,3 bis 2 Gewichtsprozent der Menge des Carbonatpulvers liegt.

8. Verfahren zum Herstellen eines dielektrischen Keramikrohpulvers nach einem der Ansprüche 1 bis 7, wobei das Carbonatpulver ein $BaCO_3$-Pulver mit einer spezifischen Oberfläche von etwa 10 m$^2$/g oder mehr ist.

9. Verfahren zum Herstellen einer dielektrischen Keramik, welches umfasst:

   Durchführen des Verfahrens nach einem der Ansprüche 1 bis 8;
   Zugeben von Bindemittel und Lösungsmittel zu dem dielektrischen Keramikrohpulver, um einen Keramikschlikker zu erzeugen;
   Formen des Keramikschlickers, um einen grünen dielektrischen Keramikpressling zu erzeugen; und
   Brennen des grünen dielektrischen Keramikpresslings.

10. Verfahren zum Fertigen eines monolithischen Keramikkondensators, welches umfasst:

   Durchführen des Verfahrens nach einem der Ansprüche 1 bis 8;
   Zugeben von Bindemittel und Lösungsmittel zu dem dielektrischen Keramikrohpulver, um einen Keramikschlikker zu erzeugen;
   Formen eines grünen Keramiklaminats, das mehrere von grünen Keramikschichten, die den Keramikschlicker umfassen, und Innenelektroden, die sich entlang der vorbestimmten Grenzflächen der Keramikschichten erstrecken, umfasst; und
   Brennen des grünen Keramiklaminats.

## Revendications

1. Méthode de fabrication d'une poudre brute céramique diélectrique ayant une composition représentée par la formule générale $ABO_3$, dans laquelle A est au moins un élément sélectionné à partir du groupe se composant de Ba, Ca, Sr et Mg, et B est au moins un élément sélectionné à partir du groupe se composant de Ti et Zr,
   la méthode comprenant la fourniture d'un mélange d'une poudre de carbonate de A et d'une poudre d'oxyde de B, et la calcination du mélange,
   la méthode étant **caractérisée en ce que**
   ladite poudre de carbonate de A possède un polymère organique adsorbé dessus, dans laquelle le composé de polymère organique possède un poids moléculaire de l'ordre d'environ 1.000 à 100.000.

2. Méthode de fabrication d'une poudre brute céramique diélectrique selon la revendication 1, comprenant par ailleurs le mélange de la poudre de carbonate et de la poudre d'oxyde de B.

3. Méthode de fabrication d'une poudre brute céramique diélectrique selon la revendication 2, comprenant par ailleurs l'autorisation pour une poudre de carbonate de A d'adsorber un composé de polymère organique afin de produire la poudre de carbonate organique contenant le composé de polymère organique adsorbé.

4. Méthode de fabrication d'une poudre brute céramique diélectrique selon la revendication 3, dans laquelle la procédure d'autorisation pour la poudre de carbonate de A d'adsorber le composé de polymère organique comprend :

   la préparation d'une suspension épaisse de la poudre de carbonate de A dispersée dans une solution contenant le composé de polymère organique ; et
   l'élimination d'un solvant contenu dans la suspension épaisse afin de produire la poudre de carbonate organique contenant le composé de polymère organique adsorbé sur la surface de la poudre de carbonate.

5. Méthode de fabrication d'une poudre brute céramique diélectrique selon une quelconque des revendications 1 à 4, dans laquelle la poudre de carbonate est une poudre de $BaCO_3$ ayant une superficie spécifique de surface d'environ 10 m$^2$/g ou plus.

6. Méthode de fabrication d'une poudre brute céramique diélectrique selon une quelconque des revendications 1 à 5, dans laquelle la quantité du composé de polymère organique adsorbé est de l'ordre d'environ 0,1% à 5% du poids de la quantité de la poudre de carbonate.

7. Méthode de fabrication d'une poudre brute céramique diélectrique selon la revendication 6, dans laquelle la quantité du composé de polymère organique adsorbé est de l'ordre d'environ 0,3 % à 2 % du poids de la quantité de la poudre de carbonate.

8. Méthode de fabrication d'une poudre brute céramique diélectrique selon une quelconque des revendications 1 à 7, dans laquelle la poudre de carbonate est une poudre de $BaCO_3$ ayant une superficie spécifique de surface d'environ 10 $m^2$/g ou plus.

9. Méthode de fabrication d'une céramique diélectrique comprenant :

l'exécution de la méthode selon une quelconque des revendications 1 à 8 ;
l'addition de liant et de solvant à la poudre brute céramique diélectrique pour préparer une suspension épaisse de céramique ;
le moulage de la suspension épaisse de céramique afin de façonner un comprimé de céramique diélectrique verte ;
et la cuisson du comprimé de céramique diélectrique verte.

10. Méthode de fabrication d'un condensateur céramique monolithe comprenant l'exécution de la méthode selon une quelconque des revendications 1 à 8 ;
l'addition de liant et de solvant à la poudre brute céramique diélectrique pour préparer une suspension épaisse de céramique ;
le façonnage d'un laminé de céramique verte comprenant plusieurs couches de céramique verte comprenant la suspension épaisse de céramique et des électrodes internes s'étendant le long des interfaces prédéterminées des couches de céramique ; et
la cuisson du laminé de céramique verte.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7118062 A
- WO 0110781 A
- US 2002135971 A
- GB 1241974 A
- EP 1013608 A
- JP 6093204 A